# EUROPEAN PATENT APPLICATION

(11) **EP 4 648 190 A1**
(43) Date of publication of application: **12.11.2025**
(21) Application number: 24216381.4
(22) Date of filing: 29.11.2024
(51) Int. Cl.: H01M 50/213, H01M 50/244, H01M 50/264, H01M 50/502

(54) **BATTERY MODULE, BATTERY PACK, AND METHOD OF MANUFACTURING BATTERY PACK**

(30) Priority: 06.05.2024 CN 202410552006; 06.05.2024 CN 202420960374 U; 02.08.2024 WO PCT/CN2024/109561
(71) Applicant: Eve Energy Co., Ltd., Huizhou, Guangdong 516006 (CN)
(72) Inventor: LIANG, Xianyu, Huizhou, Guangdong 516006 (CN); WEI, Xueqing, Huizhou, Guangdong 516006 (CN); LIU, Pingping, Huizhou, Guangdong 516006 (CN)
(74) Representative: Berggren Oy

(57) **Abstract**

A battery module includes battery cell groups and a bracket. The bracket includes at least one middle bracket (20) and a top bracket (30). The middle bracket (20) is arranged between, any one or a combination of, the top battery cell group and the non-top battery cell group and adjacent two of the battery cell groups of the non-top battery cell group. The top bracket (30) is arranged on a side of the top battery cell group facing away from the non-top battery cell group. Each of a side surface of the middle bracket (20) adjacent to the battery cell groups and a side surface of the top bracket (30) adjacent to the battery cell groups is provided with first accommodating grooves (21) arranged along the first direction (A). Each of the battery cells (10) is fixed in a corresponding one of the first accommodating grooves (21).

## Description

### TECHNICAL FIELD

The present application relates to a technical field of batteries, and in particular, to a battery module, a battery pack, and a method of manufacturing the battery pack.

### BACKGROUND

Battery modules generally include a plurality of battery cells connected in parallel and in series to make the battery modules have a relatively high capacity. However, in related module designs, a design of the battery cells stacked into groups is complex, resulting in more components and larger processing difficulties, thereby greatly reducing reliability of products.

### SUMMARY

In a first aspect, a battery module is provided. The battery module includes a plurality of battery cell groups stacked and a bracket. The battery cell groups include a top battery cell group and a non-top battery cell group. Each of the battery cell groups includes a plurality of battery cells arranged along a first direction. The bracket includes at least one middle bracket and a top bracket. The middle bracket is arranged between, any one or a combination of, the top battery cell group and the non-top battery cell group and adjacent two of the battery cell groups of the non-top battery cell group. The top bracket is arranged on a side of the top battery cell group facing away from the non-top battery cell group. Along a stacking direction of the battery cell groups, each of a side surface of the middle bracket adjacent to the battery cell groups and a side surface of the top bracket adjacent to the battery cell groups is provided with a plurality of first accommodating grooves arranged along the first direction. Each of the battery cells is fixed in a corresponding one of the first accommodating grooves.

In a second aspect, a battery pack is provided. The battery pack includes an outer housing and the battery module mentioned above. The outer housing includes a cover and a housing body closed together. The battery module is disposed inside the outer housing.

In a third aspect, a method of manufacturing a battery pack is provided. The method includes steps as follows: providing a bracket comprising at least one middle bracket and a top bracket, and two opposite sides of the middle bracket and one side of the top bracket being provided with a plurality of first accommodating grooves arranged along a first direction; providing a plurality of battery cells and fixing the battery cells inside the bracket, so that each of the battery cells is arranged inside a corresponding one of the first accommodating grooves of the bracket; providing a first adhesive layer arranged between the first accommodating grooves and the battery cells; stacking the top bracket and the middle bracket, and the first accommodating grooves of the top bracket being arranged toward the middle bracket adjacent to the top bracket; and providing bar sheets connected between a positive pole and a negative pole of each of the battery cells to form a battery module.

### BRIEF DESCRIPTION OF THE DRAWINGS

FIG. 1 is a schematic structural view of a battery module according to some embodiments of the present application.
FIG. 2 is a schematic structural view of a middle bracket according to some embodiments of the present application.
FIG. 3 is a schematic structural view of a top bracket according to some embodiments of the present application.
FIG. 4 is a schematic structural view of a non-top battery cell module according to some embodiments of the present application.
FIG. 5 is a schematic exploded view of a battery pack according to some embodiments of the present application.
FIG. 6 is a schematic structural view of a housing body according to some embodiments of the present application.

### Reference numerals:

10, battery cell; 111, positive pole; 112, negative pole; 20, middle bracket; 21, first accommodating groove; 30, top bracket; 40, first adhesive layer; 50, first end plate; 51, first positioning groove; 60, bar sheet; 70, buckle; 80, cover; 90, housing body; 91, second accommodating groove; 92, second end plate; 921, second positioning groove; 100, second adhesive layer; 110, third adhesive layer; 120, side plate; 121, groove.

### DETAILED DESCRIPTION

In the present application, unless otherwise specified and defined, terms "connect", "contact", and "fix" should be understood in a broad sense. For example, it may be a fixed connection, a detachable connection, or made as a whole. It may be a mechanical connection or an electrical connection. It may be a direct or indirect connection through an intermediate media. It may be an internal connection between two components or an interaction relationship between two components. For those skilled in the art, meanings of the above terms in the present application can be understood according to situations.

In description of the present application, it should be understood that orientational or positional relationships represented by directional terms mentioned in the present application, such as terms "up", "down", "right", etc., are orientational or positional relationships based on the drawings, and are merely for the convenience of describing the present disclosure and simplifying the description, rather than indicating or implying that the device or element is intended to have a particular orientation, or is constructed and operated in a particular orientation, and therefore, should not be interpreted as a limitation of the application. The terms "first" and "second" are used only to distinguish in description and have no special meaning.

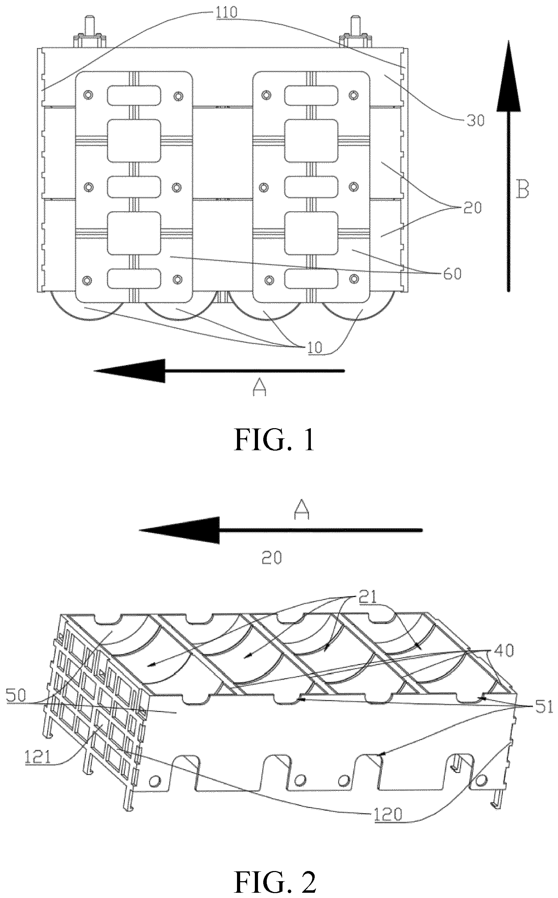

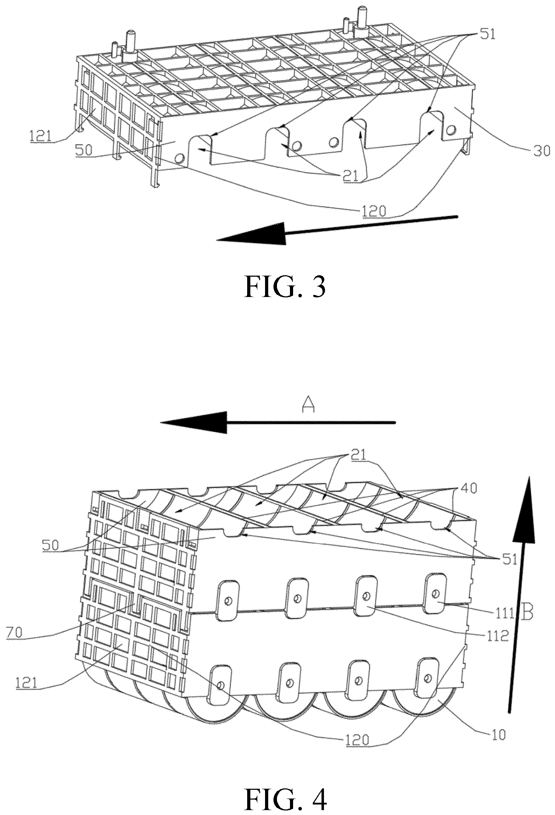

Referring to FIG. 1 to FIG. 4, a battery module is provided by the embodiments of the present application. The battery module includes a plurality of battery cell groups stacked and a bracket.

The battery cell groups include a top battery cell group and a non-top battery cell group. Each of the battery cell groups includes a plurality of battery cells 10 arranged along a first direction A.

The bracket includes at least one middle bracket 20 and a top bracket 30. The bracket 20 is arranged between, any one or a combination of, the top battery cell group and the non-top battery cell group and adjacent two of the battery cell groups of the non-top battery cell group. The top bracket 30 is arranged on a side of the top battery cell group facing away from the non-top battery cell group. Along a stacking direction B of the battery cell groups, each of a side surface of the middle bracket 20 adjacent to the battery cell groups and a side surface of the top bracket adjacent 30 to the battery cell groups is provided with a plurality of first accommodating grooves 21. The plurality of first accommodating grooves 21 are arranged along the first direction A. The plurality of first accommodating grooves 21 are provided and respectively corresponding to the plurality of battery cells 10 of one of the battery cell groups adjacent thereto. Each of the battery cells 10 is fixed in a corresponding one of the first accommodating grooves 21.

It may be understood that each of the battery cell groups includes the plurality of battery cells 10 arranged along the first direction A. An axial direction of each of the plurality of battery cells 10 may be perpendicular to the first direction A. Electrode poles having a same polarity of the plurality of battery cells 10 of one battery cell group may be located at a same side or different sides of the battery cell group. Exemplarily, the electrode poles having the same polarity of adjacent two of the battery cells 10 of one battery cell group is located at different sides of the battery cell group. A shape of the first accommodating groove 21 may be a standard geometric shape, such as a semicircle, an arc, a square, or a rectangle. Exemplarily, the shape of each of the first accommodating grooves 21 may be adapted to a shape of a peripheral surface of a corresponding one of the battery cells 10, so that the battery cells 10 can be fixed more stable by the first accommodating grooves 21. A size of each of the first accommodating grooves 21 may be set as necessary as long as the first accommodating grooves 21 each can accommodate the peripheral surface of the corresponding one of the battery cells 10 exposed inside the first accommodating groove 21. A number of the first accommodating grooves 21 has a corresponding relationship with a number of the battery cells 10. For example, a ratio of the number of the first accommodating grooves 21 to the number of the battery cells 10 may be 1: N, where N is a positive integer equal to or greater than 1. It can be understood that when the N is equal to 1, the first accommodating grooves 21 are provided and respectively corresponding to the battery cells 10, so that the battery cells can be fixed more stably. The number of the battery cell groups can be set as necessary. A shape of each of the battery cells 10 may be cylindrical, square, or other shapes. The non-top battery cell group may include one battery cell group, or include a plurality of battery cell groups. In some embodiments, the non-top battery cell group includes one battery cell group, and the middle bracket 20 is arranged between the top battery cell group and the non-top battery cell group. In other embodiments, the non-top battery cell group includes the plurality of battery cell groups, the middle brackets 20 may be arranged between the top battery cell group and the non-top battery cell group, between the adjacent two of the battery cell groups of the non-top cell group, between the top battery cell group and the non-top battery cell group, and between the adjacent two of the battery cell groups of the non-top cell group.

In some embodiments, a peripheral surface of each of the plurality of battery cells 10 of the top battery cell is wrapped in a corresponding one of the first accommodating grooves 21 of the top bracket 30 and a corresponding one of the first accommodating grooves 21 of the middle bracket 20 adjacent to the top bracket 30.

In some embodiments, the non-top battery cell group includes a middle battery cell group and a bottom battery cell group. The middle battery cell group is located between the top battery cell group and the bottom battery cell group. A peripheral surface of each of the plurality of battery cells 10 of the middle battery cell group is wrapped in a corresponding one of the first accommodating grooves 21 of one middle bracket 20 adjacent to the middle battery cell group.

It should be understood that the peripheral surface of each of the battery cells 10 of the top battery cell group may be partially arranged inside the corresponding one of the first accommodation grooves 21 of the top bracket 30 and the corresponding one of the first accommodation grooves 21 of the middle bracket 20 adjacent to the top bracket 30. In other embodiments, the peripheral surface of each of the battery cells 10 of the top battery cell group may completely be wrapped in the corresponding one of the first accommodation grooves 21 of the top bracket 30 and the corresponding one of the first accommodation grooves 21 of the middle bracket 20 adjacent to the top bracket 30. The peripheral surface of each of the battery cells 10 of the middle battery cell group may be partially arranged inside the corresponding one of the first accommodating grooves 21 of the middle bracket 20, or may completely be wrapped in the corresponding one of the first accommodating grooves 21 of the middle bracket 20.

The peripheral surface of each of the battery cells 10 may are completely wrapped, so that the stability of the battery cells 10 inside the first accommodating grooves 21 can be improved.

In some embodiments, a first adhesive layer 40 is arranged between each of the first accommodating grooves 21 and the peripheral surface of each of the battery cells 10 located inside the corresponding one of the first accommodating grooves 21.

It may be understood that the first adhesive layer 40 may be arranged on a part of the peripheral surfaces of the battery cells 10, or may be arranged on the entire peripheral surfaces of the battery cells 10. The first adhesive layer 40 is arranged on the entire peripheral surfaces of the battery cells 10, so that the connection stability between the battery cells 10 and the first accommodating groove 21 can be improved. A thickness of the first adhesive layer 40 may be set as necessary.

In some embodiments, each of the middle bracket 20 and the top bracket 30 includes two first end plates 50 arranged at a positive pole terminal and a negative pole terminal of each of the battery cells 10, respectively. Each of the first end plates 50 is provided with a plurality of first positioning grooves 51. Each of the first positioning grooves 51 is communicated with the corresponding one of the first accommodating grooves 21. A positive pole 111 and a negative pole 112 of each of the battery cells 10 are arranged inside the first positioning grooves 51 of the two first end plates 50, respectively.

It may be understood that the first positioning grooves 51 can accommodate a part of the positive/negative poles of the battery cells 10, or may accommodate the entire positive/negative poles of the battery cells 10. The positive pole 111 and the negative pole 112 of each of the battery cells 10 are respectively arranged inside the first positioning grooves 51. In some embodiments, the first positioning grooves 51 of two adjacent brackets (including the top bracket and the middle bracket) may be combined to accommodate the positive/negative poles of the battery cells 10, so that assembly and positioning of the two adjacent brackets are faster and more accurate. In other embodiments, the first positioning grooves 51 of one bracket (including the top bracket or the middle bracket) may separately accommodate the positive pole and the negative pole of each of the battery cells 10.

In some embodiments, each of the first positioning grooves 51 penetrates through the first end plates along a thickness direction of the first end plate 50. The positive pole 111 and the negative pole 112 of each of the battery cells 10 of the battery cell groups arranged at different layers are connected by a corresponding one of bar sheets 60. The bar sheets 60 are arranged on a side of a corresponding one of the first end plates 50 facing away from the battery cells 10.

It may be understood that a thickness of each of the first positioning grooves 51 may be same as a thickness of the positive pole 111 and the negative pole 112 of each of the battery cells 10, or may be greater than or less than the thickness of each of the positive pole 111 and the negative pole 112 of each of the battery cells 10. The shape of each of the first positioning grooves 51 is the same as a shape of each of the positive pole 111 and the negative pole 112 of each of the battery cells 10.

In some embodiments, the battery module includes a buckle 70 connected between the top bracket 30 and the middle bracket 20. In some embodiments, the battery module includes a buckle 70 connected between every adjacent two of the middle brackets 20. In some embodiments, the battery module includes buckles 70 connected between the top bracket 30 and the middle bracket 20 and between every adjacent two of the middle brackets 20.

It may be understood that the top bracket 30 and the middle bracket 20 are connected by the buckle 70. In some embodiments, the top bracket 30 may be provided with a clamping hook, and the middle bracket 20 may be provided with a clamping slot accordingly. In other embodiments, the top bracket 30 may be provided with a clamping slot, and the middle bracket 20 may be provided with a clamping hook accordingly. The clamping hook can be clamped inside the clamping slot realize a connection between the clamping hook and the clamping slot. The buckle 70 may be arranged around an outer side of the bracket for easy installation.

In some embodiments, the middle bracket 20 or the top bracket 30 is integrally formed. In other embodiments, both the middle bracket 20 and the top bracket 30 are integrally formed.

A method of manufacturing a battery module provided by the present application includes following steps.

At step S 1, a bracket including at least one middle bracket 20 and a top bracket 30 is provided, and two opposite sides of the middle bracket 20 and one side of the top bracket 30 are provided with a plurality of first accommodating grooves 21 arranged along a first direction A.

At step S2, a plurality of battery cells are provided and fixed inside the first accommodating grooves of the bracket, and the plurality of first accommodating grooves are provided and respectively corresponding to the plurality of battery cells.

At step S3, a first adhesive layer is provided between the first accommodating grooves 21 and the battery cells 10.

At step S4, the top bracket 30 and the middle bracket 20 are stacked, and the first accommodating grooves 21 of the top bracket 30 are arranged toward the middle bracket 20 adjacent to the top bracket 30.

At step S5, bar sheets are provided to connect positive poles and negative poles of the battery cells to form the battery module.

It may be understood that the steps of fixing the battery cells 10 inside the bracket, providing the first adhesive layer between the first accommodating grooves 21 and the battery cells 10, and stacking the top bracket 30 and the middle bracket 20 may be performed simultaneously or may be performed stepwise. In some embodiments, during a stacking process of the top bracket 30 and the middle bracket 20, the first adhesive layer is arranged between the first accommodating grooves 21 and the battery cells 10, and the battery cells 10 are fixed inside the bracket. In other embodiments, after one side of each of the battery cells 10 may be fixed inside the bracket, the first adhesive layer is arranged between one side of each of the battery cells 10 and the first accommodating grooves 21. Then the brackets to which the battery cells 10 are fixed are sequentially stacked, and the first adhesive layer is arranged between the other side of the battery cells 10 and the first accommodating grooves 21. In some embodiments, the first adhesive layer may be applied to a surface of each of the battery cells 10 or the first accommodating grooves 21 inside, then the battery cells 10 are arranged inside the first accommodating grooves 21, so that the adhesive is arranged between the first accommodating grooves 21 and the battery cells 10. In other embodiments, after the battery cells 10 are arranged inside the first accommodating grooves 21, the first adhesive layer is applied between the first accommodating grooves 21 and the battery cells 10, so that the first adhesive layer is arranged between the first accommodating grooves 21 and the battery cells 10. A method for preparing the first adhesive layer can be based on a form, a type, and characteristics of the first adhesive layer. For example, when the adhesive used is in a form of a paste, the adhesive can be prepared by coating, so that the adhesive can completely cover the surface of each of the battery cells 10, and the battery cells 10 can be better fixed inside the first accommodating grooves 21. The number of the top bracket may be one, and the number of the middle brackets may be multiple, which may be set as necessary. When there are a plurality of middle brackets, the top bracket and the middle brackets are stacked in sequence. The bar sheets 60 can be fixed by welding.

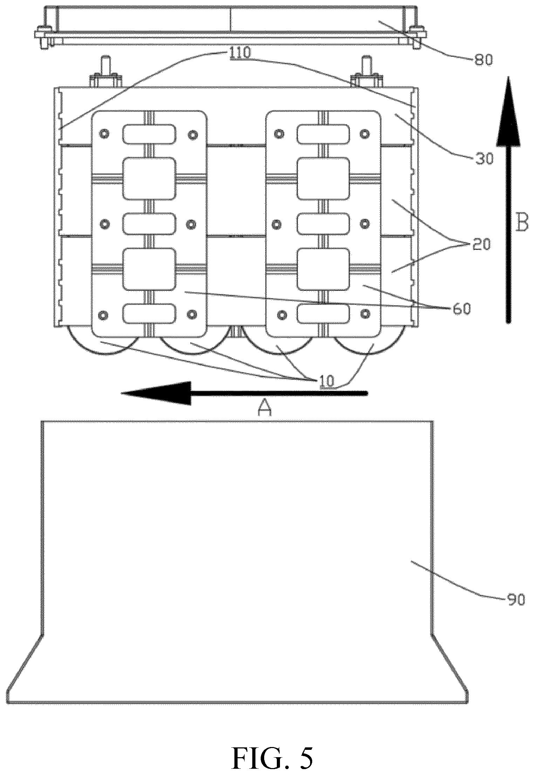

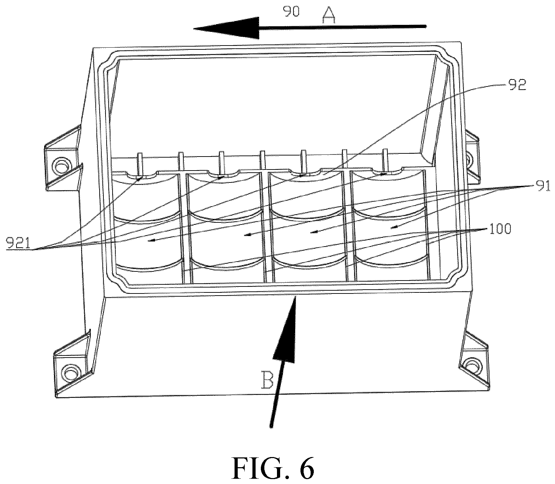

Referring to FIG. 1 to FIG. 6, a battery pack is provided. The battery pack includes an outer housing and the battery module mentioned above. The outer housing includes a cover 80 and a housing body 90 closed together. The battery module is disposed inside the outer housing.

In some embodiments, the non-top battery cell group includes a bottom battery cell group and a middle battery cell group located between the top battery cell group and the bottom battery cell group. The bottom battery cell group is arranged adjacent to an inner bottom of the housing body. The inner bottom of the housing body is provided with a plurality of second accommodating grooves 91 arranged along the first direction A. The plurality of second accommodating grooves 91 are provided and respectively corresponding to the plurality of battery cells 10 of the bottom battery cell group. A part of a peripheral surface of each of the battery cells 10 of the bottom battery cell group is fixed inside a corresponding one of the second accommodating grooves 91.

It may be understood that a shape of each of the second accommodating grooves 91 may be a standard geometric shape, such as a semicircle, an arc, a square, or a rectangle. The shape of of each of the second accommodating groove 91 is adapted to a shape of the peripheral surface of a corresponding one of bottom battery cells 10, so that the bottom battery cells 10 can be fixed by the second accommodating grooves 91 more stably. A size of each of the second accommodating grooves 91 may be set as necessary as long as the second accommodating grooves 91 can accommodate peripheral surfaces of the bottom battery cells 10 exposed by the second accommodating grooves 91. The number of the second accommodating grooves 91 correspond to the number of the bottom battery cells 10. The second accommodating grooves 91 and the bottom battery cells 10 may be in one-to-one correspondence or one-to-multiple correspondence, and the one-to-one correspondence has better stability.

In some embodiments, a second adhesive layer 100 is arranged between the second accommodating grooves 91 and the peripheral surfaces of the battery cells 10 of the bottom battery cell group located inside the second accommodating grooves 91.

In some embodiments, two second end plates 92 are arranged on the inner bottom of the housing body 90. The two second end plates 92 are arranged at positive pole terminals and negative pole terminals of the battery cells 10, respectively. Each of the second end plates 92 is provided with second positioning grooves 921 each communicated with the corresponding one of the second accommodating grooves 91. The positive poles 111 and the negative poles 112 of the battery cells of the bottom battery cell group are arranged inside the second positioning grooves 921 of the two second end plates 92, respectively.

It may be understood that the second adhesive layer 100 may be arranged on a part of the peripheral surfaces of the bottom battery cells 10, or may be arranged on the entire peripheral surfaces of the bottom battery cells 10. The second adhesive layer 100 is arranged on the entire peripheral surfaces of the bottom battery cells 10, so that a connection stability between the bottom battery cells 10 and the second accommodating grooves 91 can be improved. A thickness of the second adhesive layer 100 may be set as necessary.

In some embodiments, a third adhesive layer 110 is arranged between two sides of the battery module along the first direction A and the housing body 90.

It may be understood that the third adhesive layer 110 may be arranged on a part of side surfaces of the battery module on two sides along the first direction A, or may be arranged on all side surfaces of the battery module on the two sides along the first direction A. The second adhesive layer 100 may be arranged on all side surfaces of the two sides of the battery module along the first direction A, and a connection stability between the battery module and the housing body 90 can be improved. A shape of the third adhesive layer 110 matches a gap between the two sides of the battery module along the first direction A and the housing body 90. A thickness of the third adhesive layer 110 may be set as necessary.

In some embodiments, each of the top bracket 30 and the middle bracket 20 further comprises two side plates 120 respectively arranged on two sides of the battery cell group along the first direction A. The third adhesive layer 110 is arranged between the side plates 120 and the housing body 90. A side of each of the side plates 120 adjacent to the housing body 90 is provided with one or more grooves 21.

It may be understood that a size and a shape of each of the side plates 120 can be set as necessary. The top bracket 30 and the side plates 120 of the middle bracket 20 may abut against each other to be combined into a whole, thereby increasing a coverage area of the third adhesive layer 110. The number, size, shape, and depth of each of the grooves 121 on the side plates 120 can be set as necessary.

A method of manufacturing a battery module provided by the present application includes following steps.

At step S11, the battery battery mentioned above is provided.

At step S12, an outer housing including a cover 80 and a housing body 90 are provided, an inner bottom of the housing body 90 is provided with a plurality of second accommodating grooves 91 arranged along a first direction A, the battery module is disposed inside the housing body 90, battery cells 10 on a side of the battery module facing away from a top bracket 30 are arranged inside the second accommodation grooves 91, and an adhesive is provided between the second accommodating grooves 91 and the battery cells 10 inside the second accommodating grooves 91.

At step S13, the cover 80 and the housing body 90 are closed together to form the battery pack.

It may be understood that in some embodiments, the adhesive may be applied to a surface of each of the battery cells 10 or inside the second accommodating grooves 91, and then the battery cells 10 may be arranged inside the second accommodating grooves 91, so that the adhesive is arranged between the second accommodating grooves 91 and the battery cells 10. In other embodiments, after the battery cells 10 are arranged inside the second accommodating grooves 91, the adhesive may be injected between the second accommodating grooves 91 and the battery cells 10, so that the adhesive may be arranged between the second accommodating grooves 91 and the battery cells 10. An arrangement way of the adhesive may be determined according to a form, a type and characteristics of the adhesive. For example, when the adhesive used may be in a form of a paste, the adhesive may be provided to completely cover the surface of each of the battery cells 10, so that the battery cells 10 can be better fixed inside the second accommodating grooves 91.

In some embodiments, the step of closing the cover 80 and the housing body 90 together includes the following step.

At step S131, the cover 80 and the housing body 90 are closed together after the adhesive is arranged between two sides of the battery module along the first direction A and the housing body 90.

It may be understood that after the battery module is placed inside the housing body 90, the adhesive can be poured between the two sides of the battery module along the first direction A and the housing body 90, so as to prevent the adhesive from being squeezed out when the battery module is placed inside the housing body 90. The adhesive may be in the form of a paste to prevent the adhesive from flowing to other parts. In this case, it is beneficial to fill a gap between the two sides of the battery module along the first direction A and the housing body 90.

An electrical device is further provided by the present application. The electrical device includes the battery module mentioned above or the battery pack mentioned above.

In the battery module provided by the present application, the middle bracket is arranged adjacent two of the battery cell groups, and the top bracket is arranged on a side of the top battery cell group facing away from the non-top battery cell group. The peripheral surfaces of the battery cells are fixed inside the first accommodating grooves on the two sides of the middle bracket and the first accommodating grooves of on the side of the top bracket adjacent to the battery cell groups, so that the battery cells can be fixed fast and stably, thereby simplifying a fixing structure of the battery cells, reducing the number of components, simplifying processes, and reducing costs.

In the method of manufacturing the battery pack, the adhesive is arranged between the second accommodating grooves and the battery cells arranged inside the second accommodating grooves, so that the battery module can be fixed inside the housing body fast and stably, and the processes are simple.

In the method of manufacturing the battery pack, the battery cells are arranged inside the first accommodating grooves, and the adhesive is arranged between the battery cells and the first accommodating grooves, so that the battery cells can be fixed on the bracket fast and stably, and the processes and the structure are simple, thereby reducing the number of components and reducing costs.

## Claims

1. A battery module, **characterized in that** the battery module comprises:
a plurality of battery cell groups stacked and comprising a top battery cell group and a non-top battery cell group, wherein each of the battery cell groups comprises a plurality of battery cells (10) arranged along a first direction (A); and
a bracket comprising:
at least one middle bracket (20) arranged between, any one or a combination of, the top battery cell group and the non-top battery cell group and adjacent two of the battery cell groups of the non-top battery cell group; and
a top bracket (30) arranged on a side of the top battery cell group facing away from the non-top battery cell group;
wherein along a stacking direction (B) of the battery cell groups, each of a side surface of the middle bracket (20) adjacent to the battery cell groups and a side surface of the top bracket (30) adjacent to the battery cell groups is provided with a plurality of first accommodating grooves (21) arranged along the first direction (A), and each of the battery cells (10) is fixed in a corresponding one of the first accommodating grooves (21).

2. The battery module according to claim 1, **characterized in that** the plurality of first accommodating grooves (21) are provided and respectively corresponding to the plurality of battery cells (10) of one of the battery cell groups adjacent thereto.

3. The battery module according to claim 1, **characterized in that** a peripheral surface of each of the plurality of battery cells (10) of the top battery cell is wrapped in a corresponding one of the first accommodating grooves (21) of the top bracket (30) and a corresponding one of the first accommodating grooves (21) of the middle bracket (20) adjacent to the top bracket (30);
optionally, the non-top battery cell group comprises a bottom battery cell group and a middle battery cell group located between the top battery cell group and the bottom battery cell group, and a peripheral surface of each of the battery cells (10) of the middle battery cell group is wrapped in a corresponding one of the first accommodating grooves (21) of the middle bracket (20) adjacent to the middle battery cell group;
optionally, a peripheral surface of each of the plurality of battery cells (10) of the top battery cell is wrapped in a corresponding one of the first accommodating grooves (21) of the top bracket (30) and a corresponding one of the first accommodating grooves (21) of the middle bracket (20) adjacent to the top bracket (30), the non-top battery cell group comprises a bottom battery cell group and a middle battery cell group located between the top battery cell group and the bottom battery cell group, and a peripheral surface of each of the battery cells (10) of the middle battery cell group is wrapped in a corresponding one of the first accommodating grooves (21) of the middle bracket (20) adjacent to the middle battery cell group.

4. The battery module according to claim 1, **characterized in that** the battery module further comprises a first adhesive layer arranged between each of the first accommodating grooves (21) and a peripheral surface of each of the battery cells (10) located inside the corresponding one of the first accommodating grooves (21).

5. The battery module according to claim 1, **characterized in that** each of the middle bracket (20) and the top bracket (30) comprises two first end plates (50) respectively arranged at a positive pole terminal and a negative pole terminal of each of the battery cells, each of the first end plates (50) is provided with a plurality of first positioning grooves (51) each communicated with the corresponding one of the first accommodating grooves (21), and a positive pole (111) and a negative pole (112) of each of the battery cells (10) are arranged inside the first positioning grooves (51) of the two first end plates (50), respectively.

6. The battery module according to claim 5, **characterized in that** the battery module further comprises:
bar sheets (60) each arranged on a side of a corresponding one of the first end plates (50) facing away from the battery cells, wherein each of the first positioning grooves (51) penetrates through the first end plates (50) along a thickness direction of the first end plates (50), and the positive pole (111) and the negative pole (112) of each of the battery cells (10) of the battery cell groups arranged in different layers are connected by a corresponding one of the bar sheets (60).

7. The battery module according to claim 5, **characterized in that** the battery module further comprises a buckle (70) connected between the top bracket (30) and the middle bracket (20) or connected between every adjacent two of a plurality of middle brackets (20); or,
the battery module further comprises buckles (70) connected between the top bracket (30) and the middle bracket (20) and between every adjacent two of a plurality of middle brackets (20).

8. The battery module according to any one of claims 1-7, **characterized in that** at least one of the middle bracket (20) and the top bracket (30) is integrally formed.

9. A battery pack, **characterized in that** the battery pack comprises:
an outer housing comprising a cover (80) and a housing body (90) closed together; and
a battery module according to any one of claims 1-8 arranged inside the outer housing.

10. The battery pack according to claim 9, **characterized in that** the non-top battery cell group comprises:
a bottom battery cell group arranged adjacent to an inner bottom of the housing body (90); and
a middle battery cell group located between the top battery cell group and the bottom battery cell group;
wherein the inner bottom of the housing body (90) is provided with a plurality of second accommodating grooves (91) arranged along the first direction (A), each of the second accommodating grooves (91) is provided corresponding to a respective one of the battery cells (10) of the bottom battery cell group, and a part of a peripheral surface of each of the battery cells (10) of the bottom battery cell group is fixed inside a corresponding one of the second accommodating grooves (91).

11. The battery pack according to claim 10, **characterized in that** the battery pack further comprises a second adhesive layer (100) arranged between the peripheral surface of each of the battery cells (10) of the bottom battery cell group and the corresponding one of the second accommodating grooves (91);
optionally, the battery pack further comprises two second end plates (92) arranged on the inner bottom of the housing body (90) and respectively arranged at a positive pole terminal and a negative pole terminal of each of the battery cells (10), each of the second end plates (92) is provided with second positioning grooves (921) each communicated with the corresponding one of the second accommodating grooves (91), and a positive pole (111) and a negative pole (112) of the battery cells (10) of the bottom battery cell group are respectively arranged inside the second positioning grooves (921) of the two second end plates (92);
optionally, the battery pack further comprises a second adhesive layer (100) arranged between the peripheral surface of each of the battery cells (10) of the bottom battery cell group and the corresponding one of the second accommodating grooves (91), the battery pack further comprises two second end plates (92) arranged on the inner bottom of the housing body (90) and respectively arranged at a positive pole terminal and a negative pole terminal of each of the battery cells (10), each of the second end plates (92) is provided with second positioning grooves (921) each communicated with the corresponding one of the second accommodating grooves (91), and a positive pole (111) and a negative pole (112) of each of the battery cells (10) of the bottom battery cell group are respectively arranged inside the second positioning grooves (921) of the two second end plates (92).

12. The battery pack according to claim 9, **characterized in that** the battery pack further comprises a third adhesive layer (110) between two sides of the battery module along the first direction (A) and the housing body (90).

13. The battery pack according to claim 12, **characterized in that** each of the top bracket (30) and the middle bracket (20) further comprises two side plates (120) respectively arranged on two sides of the battery cell group along the first direction (A), the third adhesive layer (110) is arranged between the side plates (120) and the housing body (90), and a side of each of the side plates (120) adjacent to the housing body (90) is provided with one or more grooves (121).

14. A method of manufacturing a battery pack, **characterized in that** the method comprises:
providing the battery module according to any one of claims 1-8;
providing an outer housing comprising a cover (80) and a housing body (90), an inner bottom of the housing body (90) being provided with a plurality of second accommodating grooves (91) arranged along a first direction (A), the battery module being disposed inside the housing body (90), a plurality of battery cells (10) on a side of the battery module facing away from a top bracket (30) being arranged inside the second accommodation grooves (91), and an adhesive being provided between the second accommodating grooves (91) and the battery cells inside the second accommodating grooves (91); and
closing the cover (80) and the housing body (90) together to form the battery pack;
wherein the providing the battery module comprises:
providing a bracket comprising at least one middle bracket (20) and a top bracket (30), and two opposite sides of the middle bracket (20) and one side of the top bracket (30) being provided with a plurality of first accommodating grooves (21) arranged along the first direction (A);
providing the plurality of battery cells (10) and fixing the battery cells inside the bracket, so that each of the battery cells (10) is arranged inside a corresponding one of the first accommodating grooves (21) of the bracket;
providing a first adhesive layer (40) arranged between the first accommodating grooves (21) and the battery cells (10);
stacking the top bracket (30) and the middle bracket (20), and the first accommodating grooves (21) of the top bracket (30) being arranged toward the middle bracket (20) adjacent to the top bracket (30); and
providing bar sheets (60) each connected between a positive pole (111) and a negative pole (112) of each of the battery cells (10) to form the battery module.

15. The method according to claim 14, **characterized in that** the closing the cover (80) and the housing body (90) together to form the battery pack comprises:
closing the cover (80) and the housing body (90) together after the adhesive being arranged between two sides of the battery module along the first direction (A) and the housing body (90).
